# EUROPEAN PATENT SPECIFICATION

(11) **EP 1 583 707 B1**
(45) Date of publication and mention of the grant of the patent: **11.10.2006**
(21) Application number: 03789647.9
(22) Date of filing: 17.12.2003
(51) Int. Cl.: B65G 47/14

(54) **SUPPLY DEVICE**
ZUFÜHRVORRICHTUNG
DISPOSITIF DISTRIBUTEUR

(30) Priority: 24.12.2002 NL 1022267
(43) Date of publication of application: 12.10.2005
(73) Proprietor: CFS Weert B.V., 6006 RV Weert (NL)
(72) Inventor: VAN HOOF, Johannes, Hendricus, Fransiscus, NL-6021 ZW Budel (NL); VEROLME, Mattheus, B-3680 Maaseik (BE)
(74) Representative: Wolff, Felix
(86) International application number: PCT/NL2003/000898
(87) International publication number: WO 2004/058605

(56) References cited:
- EP-A- 0 036 282
- GB-A- 328 145
- US-A- 4 174 775
- US-A- 5 450 706

## Description

The invention relates to a device for supplying articles provided with a head and a stick, such as lollipops, to a further treatment station, such as a packaging machine.

For the further treatment it may be desirable that the lollipops are held in a reliable manner so that the treatment of the lollipops takes place in a reliable manner. The lollipops held may for instance be provided with a coating or be packed in a foil, for instance a so-called bunch wrap. In that case the disorderly flow of lollipops (coming for instance from a cooling machine or supply in bulk) has to be changed into an orderly flow.

For thus organising the lollipops they are usually cast on an assembly of an outer distribution disc rotating in conveyance direction to a discharge station, which distribution disc at its circumference is provided with holes for accommodating one lollipop head at a time, and a spread disc lying within it driven in opposite direction. The spread disc rotates slightly faster than the distribution disc, so that the lollipops do not pile up. Between both stations a partition is provided, which however does not extend up to above the holes in the distribution disc. At its circumference the distribution disc is provided with slits for accommodating the sticks of the lollipops when the heads of the lollipops have been accommodated in the holes. Furthermore fixed rods have been provided for urging the sticks into the slits and keeping them down and oriented radially outwards. Below the hole area of the distribution disc a driven roller may be arranged, which is positioned to engage the lower side of the heads accommodated in the holes so as to exert a radial inward force on them. Such an assembly is disclosed in US 5,450,706. At the location of the discharge station, where the sticks are horizontally oriented radially outwards from the distribution plate, a further conveyor has been positioned provided with a series of small clamps that each in a synchronised manner are able to grab a lollipop stick and then lift the lollipops in question out of the distribution disc and convey them to a point of discharge to the packaging machine or other treatment machine situated at a distance.

A drawback of the known supply device is that when urging the lollipop sticks towards the slits said sticks may pass over the slit. As any wrongly oriented stick means a faulty filling or no filling of the packaging foil or wrap, this may lead to considerable reduction of the production efficiency and waste of packaging material.

It is an object of the invention to provide a supply device of the type mentioned in the preamble which improves on this.

To that end the invention provides a device according to the preamble, comprising:
a supply station for the articles in a disorderly flow,
a discharge station for discharge of the articles in an orderly flow,
a distribution disc connecting to the supply station and the discharge station, which distribution disc is rotatable in a direction of rotation and has a series of holes at its circumference for accommodation of the heads of the articles, wherein the upper side of the distribution disc comprises slits for accommodation of the sticks, which slits extend from the holes to the outer edge of the distribution disc and wherein the slits comprise a bottom and edges extending from the bottom up and situated at a downstream side and upstream side of the slit in direction of rotation, respectively, wherein the downstream edge runs at least almost in a vertical plane and at least almost up to the upper side of the distribution disc, and the upstream edge at least an upper portion gives way with respect to the downstream edge in upstream direction.

As the upstream edge, also called the trailing edge, in the device according to the invention gives way in an upstream direction, the width of the opening of a slit at the upper side of the distribution disc is larger. Said opening among others serves for catching sticks of the objects. A wider opening has the advantage of a stick more easily ending up in the slit or that it can be more reliably urged into the slit. As a result the chance of a stick passing over a slit is lowered. The downstream edge, also called the leading edge, here forms a stop for a stick that moves into the slit via the upstream side and by means of the opening of a slit described above is caught at the upper side of the distribution disc. Said stop halts the component of the motion of the stick that is oriented tangential with respect to the distribution disc, as a result of which it is prevented that the stick can pass over the slit. The stick will always end up in the slit, due to which the degree of filling of the distribution disc can be optimal, and thus the further treatment process.

From a further aspect the invention provides a device for supplying articles provided with a head and a stick, such as lollipops, to a further treatment station, such as a packaging machine, comprising:
a supply station for the articles in a disorderly flow,
a discharge station for discharge of the articles in an orderly flow,
a distribution disc connecting to the supply station and the discharge station, which distribution disc is rotatable in a direction of rotation and has a series of holes at its circumference for accommodation of the heads of the articles, wherein the upper side of the distribution disc comprises slits for accommodation of the sticks, which slits extend from the holes to the outer edge of the distribution disc and wherein the slits comprise a bottom and edges extending from the bottom up and situated at a downstream side and upstream side of the slit in direction of rotation, respectively, wherein the downstream edge runs at least almost in a vertical plane and at least almost up to the upper side of the distribution disc, and the upper side of the distribution disc at the upstream side of the slit is provided with a recess which merges into the slit.

Said recess ensures the giving way of the upstream or trailing edge from the slit, as a result of which the slit at the upper side of the distribution disc is widened.

Preferably the recesses are less deep than the slits. The slit according to this preferred embodiment combines a wide opening due to the slit with recess at the upper side of the distribution disc with a non-widened portion at the bottom of the slit. From the wide opening a stick can reliably be urged in the non-widened portion at the bottom of the slit, which non-widened portion places the sticks in a wanted position, preferably a stable position having a defined orientation.

The recesses may have different shapes. Preferably the recesses are bounded in upstream direction by an inclined edge portion. The inclined edge portion ensures a guidance of the sticks in the direction of the bottom of the slit. In the recess according to this preferred embodiment, a stick may end up rolling and/or sliding naturally along the inclined edge portion onto the bottom of the slits.

Preferably the inclined edge portion at the side of the recess facing away from the slit at least almost connects to the upper side of the distribution disc. As a result the sticks are able to move continuously via the recess to the slit from the upper side of the distribution disc, which ensures a smooth course of the sticks towards the slits.

In a hole at the circumference of the distribution disc the head of an article is accommodated and the stick of the article projects from the hole. For guiding the stick on its way to the bottom of the slit in such a way that the head remains in the hole, the inclined edge portion, preferably, also slopes towards the hole. Said preferred embodiment results in an improvement of the smooth course of the sticks towards the slits.

Preferably a generating line of the inclined edge portion is oriented to the centre of the hole. The inclined edge portion ends in a hole. When an article is placed in the hole the stick will be oriented at least almost to the centre of the hole, just like the generating line according to this preferred embodiment. The inclined edge portion will optimally guide and support the stick, when the stick of an object in the hole preferably contacts the generating line. For instance the generating line at the location of the inclined edge portion may correspond to the at least almost straight line which is formed by the stick of an object lying in the hole. As a result the stick will be supported by the inclined edge portion over an as large as possible length, also during the run-in motion.

Preferably the generating line comprises a convex curve, as considered from the upper side of the distribution disc. As a result the stick will preferably be supported at one location as a result of which less friction occurs between the inclined edge portion and the stick, and the stick will move more easily in the direction of the bottom of the slit.

Preferably a cross-section of the inclined edge portion in a direction almost tangential to the distribution disc, comprises a concave curve, as considered from the upper side of the distribution disc.

In an embodiment the slits are oriented such that the sticks are situated according to lines that go through the centre of the distribution disc. An advantage of this embodiment is that the articles can be placed in a stable position wherein the sticks extend purely radially with respect to the distribution disc. With the known position of the centre of the distribution disc, the exact position of the sticks in the supply device is known, as a result of which the grippers and the like for further transport of the lollipops can be accurately operative.

This situation may in this embodiment be achieved by letting the heads of the articles abut the downstream edge portions of the holes and the sticks abut the upstream edge of the slits.

The dimensioning of the slits and thus the distribution disc in this case is adjusted to the embodiment of the lollipops in question to be treated. The correct position of the slits among other things depends on the dimension of the distribution disc, including the dimensions of the holes and the slits, and the dimensions of the articles, including the dimensions of the heads and the sticks. Preferably the width of the slits near the bottom of the slits is wider than the sticks of the lollipops to be treated.

The stable position may for instance be achieved by letting the heads of the articles abut the downstream edge portions of the holes, and the sticks abut the upstream edge of the (relatively broad) slits. This situation is achieved in a natural manner in a supply device provided with fixed rods for urging the sticks into the slits and keeping them down and oriented radially outwards. As the permanent rods engage the sticks of the articles, the sticks of the articles at the circumference of the distribution disc are restrained with respect to the rotation of the distribution disc. As a result the sticks contact the upstream edge of the slits and the heads are pushed in downstream direction against the edge portions of the holes.

Such a stable position may on the one hand also be achieved with an embodiment in which the slits are shifted parallel over a distance s with respect to a radial line through the centre of the corresponding holes and/or a radial line of the distribution disc. On the other hand also with an embodiment in which the slits are placed at an angle β to a radial line of the distribution disc. These embodiments may also be combined.

In this embodiment the slits are inclined and/or shifted with respect to the radial lines through the centre of the distribution disc and possibly the centres of the corresponding holes. The distance s and/or the angle β among other things depend on the dimension of the distribution disc, including the dimensions of the holes and the slits, and the dimensions of the articles, including the dimensions of the heads and the sticks. It is observed here that the distance s preferably is larger than zero.

Preferably the distance s and/or the angle β is chosen such that the openings of the slits at the outer edge of the distribution disc are situated in a downstream direction with respect to an axial line of the distribution disc which runs through the centre of the corresponding holes.

It is observed that the said distance s and/or rotation β can also be advantageously used in a common distribution disc, without the slit edges that give way.

From a further aspect the invention provides a device for supplying articles provided with a head and a stick, such as lollipops, to a further treatment station, such as a packaging machine, comprising:
a supply station for the articles in a disorderly flow,
a discharge station for discharge of the articles in an orderly flow,
a distribution disc connecting to the supply station and the discharge station, which distribution disc is rotatable in a direction of rotation and has a series of holes at its circumference for accommodation of the heads of the articles, wherein the upper side of the distribution disc comprises slits for accommodation of the sticks, which slits extend from the holes to the outer edge of the distribution disc and wherein the slits comprise a bottom and edges extending from the bottom up and situated at a downstream side and upstream side of the slits in direction of rotation, respectively, wherein the at least one of the downstream edge and upstream edge of the slits in at least an upper portion of the slit gives way for forming an inclined edge portion that also slopes towards the hole.

Preferably the inclined edge portion at the side of the recess facing away from the slit at least almost connects to the upper side of the distribution disc.

Preferably the generating line of the inclined edge portion is oriented to the centre of the hole.

Preferably the generating line comprises a convex curve, as considered from the upper side of the distribution disc.

Preferably a cross-section of the inclined edge portion in a direction almost tangential to the distribution disc, comprises a concave curve, as considered from the upper side of the distribution disc.

The invention will be elucidated on the basis of an exemplary embodiment shown in the attached drawings, in which:
Figure 1 shows a schematic view of a supply device comprising a distribution disc according to the state of the art;
Figure 2 shows a schematic top view of a distribution disc according to the invention;
Figure 3 schematically shows a detail of the distribution disc of figure 2; and
Figure 4 shows a view in perspective of the edge of the distribution disc according to the invention.

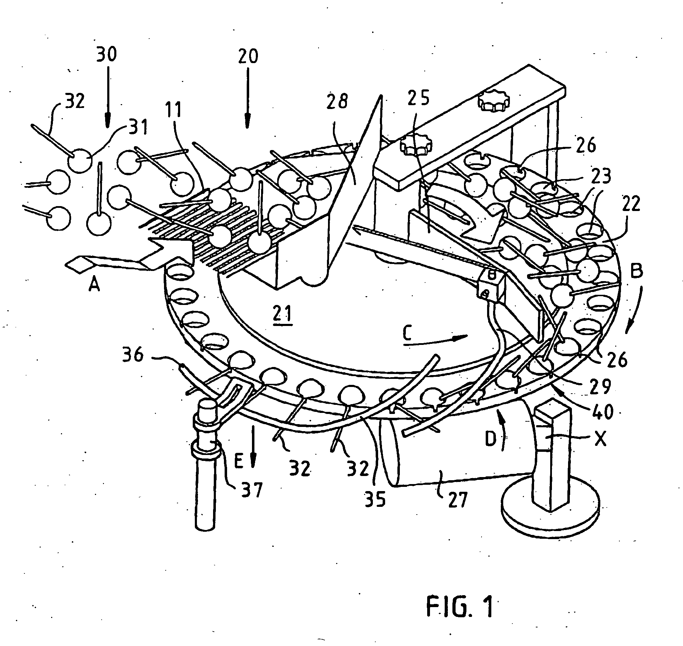

In the device according to the state of the art described here as an example, the articles are in this case lollipops 30, having a head 31 and a stick 32 (see figure 1). The lollipops arrive in a disorderly flow from a supply station onto a supply grid 11 that ends above the supplier 20 that comprises a spread disc 21 and a distribution disc 20 surrounding it, respectively. Furthermore a partition 25 is shown which stops the lollipops in the direction of rotation of the discs.

Figure 1 shows that the distribution disc 22 with the upper surface connects to the upper surface of the spread disc 21. At its circumference the distribution disc 22 is provided with a series of holes 23, which in this example are continuous. The holes 23 have such dimensions that the heads 31 of the lollipops 30 fit into it without clamping. At the upper edge the holes 23 are provided with a slit 26, which extends radially to the outside, in order to open in the circumferential edge of the distribution disc 22.

The partition 25 constitutes a boundary of the spread space on the spread disc 21.

Downstream of the partition 25 a rod 29 is arranged, which extends above the spread disc 22 and runs along in circumferential direction and inclines downwards and ensures the tilting to the outside of the sticks. Downstream thereof there is a second rod 35, which is statically attached to a fixed holder 37, and which also extends in circumferential direction, and in the first, upstream portion is oriented downward in an inclined manner. The rod 35 ends at the location of end 36, on which further means can be connected for a piece by piece orderly transport of the lollipops 30 for further treatment, such as for instance packaging in a packaging device.

Immediately downstream of the partition 25 a roller 27 is positioned below the distribution disc 22, which roller 27 rotates in the direction D and moves along the lower end of the holes 23 with its surface.

In operation the lollipops 30, coming from the supply station, are supplied over the grid 11, guided by partition 28, onto the assembly of spread plate 21 and distribution plate 22, in the direction A. The distribution disc 22 here circulates in the direction B, and the spread plate 21 circulates at a higher speed yet in counter direction in the direction C, in order to bring the lollipops 30 in an as fluent as possible manner with their heads into the holes 23. In that path, until connection to the roller 27, the holes 23 are downwardly shielded by edge plate 40, to keep the heads 31 of the lollipops 30 in the holes 23.

The sticks 32 may then still have any give position. They are urged radially to the outside by the rod 29 and under the influence of roller 27, which engages the lower side of the heads 31 and urges them radially inwards, the stick 32 tilts radially to the outside. The rod 29 here guides the sticks 32 until they -at least almost- end up in the slits 26. The next rod 35 completes this motion of the sticks 32, so that they extend horizontally and radially to the outside with respect to the distribution disc 22. In the portion connecting to its portion extending inclined and downward, the rod 35 here keeps the sticks 32 in that position by exerting a downward force E on them.

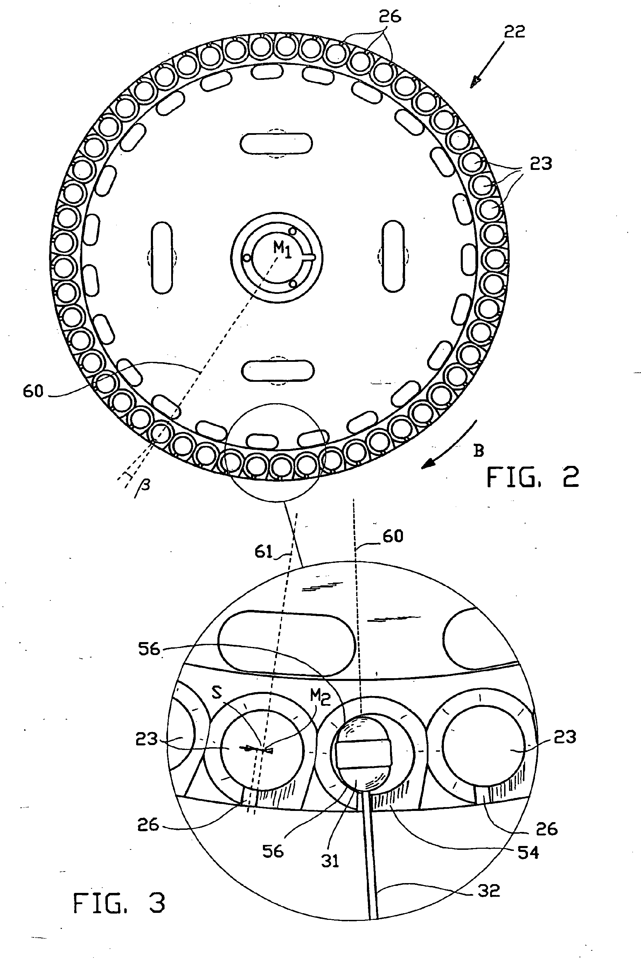

Figure 2 shows a top view of a distribution disc 22 according to the invention. The distribution disc 22 is circular having a centre and a point of rotation M and comprises a series of holes 23 situated at its circumference, which holes are each provided with a slit 26 that extends from the hole to the outer edge of the distribution disc 22. The distribution disc as shown in figure 2 is adapted to be rotated in a direction of rotation B.

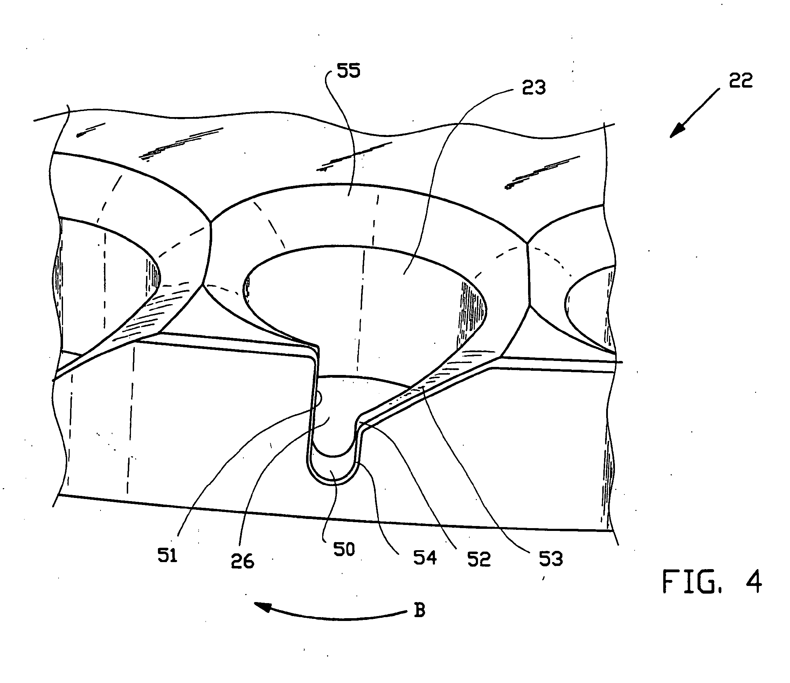

Figure 4 shows that the slit 26 has a bottom 50, and edges 51, 52 extending from the bottom up and situated at a downstream side and upstream side of the slit 26, respectively. The downstream edge 51, also called the leading edge, at least almost runs in a vertical plane and at least almost up to the upper side of the distribution disc 22, and the upstream edge 52 also called the trailing edge, at least partially gives way in an upstream direction (in opposite direction of the direction of rotation B). The upstream edge 52 comprises an inclined edge portion 53 that slopes to the slit 26. Figure 4 shows that in this exemplary embodiment the inclined plane 53 does not continue to the bottom 50 of the slit 26. At the bottom of the slit 26 the upstream edge thus comprises one edge 54 that runs at least almost in a vertical plane and at least up to the inclined edge portion 53. The vertical edge 54 extends to a level that is higher than the level at a distance 1/2 D of the head of the lollipop above the lower side holes 23. The bottom part of the slit 26 that is bounded at the upstream side by edge 54 and at the downstream side by edge 51, and furthermore by bottom 50 is a little wider than the stick, so that the stick easily falls into the bottom part and can also be easily removed from it again. In this exemplary embodiment the edge 54 and the downstream edge 51 of the slit are substantially parallel to each other considered in a vertical plane.

Figure 4 furthermore shows that the holes 23 are provided with a concave curve 55 as considered from the upper side of the distribution disc 22. Preferably this concave curve 55 continues at the location of the inclined plane 53. Near the hole 23 the inclined edge portion 53 merges into the concave curve 55. As a result the inclined edge portion 53 will not only slope towards the slit 26, but also to towards the hole 23. Preferably a generating line of the concave curve 55 and the inclined edge portion 53 is oriented to the centre of the hole 23.

In the exemplary embodiment as shown in figure 2, the slits 26 are rotated over an angle β to the radial line 60 of the distribution disc 22. The slits 26 are rotated in a downstream direction (in the direction of arrow B) around the hole 23.

An alternative embodiment is shown in figure 3. Here the slits are shifted parallel over a distance s with respect to the radial 61 through the centre M2 of the hole 23. The slit 26 is shifted in a downstream direction (in the direction of arrow B).

Both exemplary embodiments mentioned above ensure a stable position of the articles, wherein the sticks 32 are accommodated in the slits 26, which in their bottom area are wider than the thickness of the stick, extending purely radially with respect to the distribution disc 22. This situation is shown in figure 3. Figure 3 shows the head 31 of a lollipop which is situated in a hole 23, and which is provided with a stick 32 in a slit 26. The head 31 of the lollipop abuts the downstream portion 56 of the hole 23, whereas the stick 32 abuts the upstream portion 54 of the slit 26. The dimensions of the holes 23 and the slits 26, and the orientation of the slits 26 on the distribution disc have been chosen such that the stick 32 of the lollipop during the rotation of the distribution disc 22 extends stably, purely radially with respect to the distribution disc 22 in the situation of the shown lollipop in figure 3.

The exemplary embodiments mentioned above may also be combined, wherein the slits are shifted and rotated for realising a stable position of the articles.

## Claims

1. Device for supplying articles (30) provided with a head (31) and a stick (32), such as lollipops, to a further treatment station, such as a packaging machine, comprising:
a supply station for the articles (30) in a disorderly flow,
a discharge station for discharge of the articles (30) in an orderly flow,
a distribution disc (22) connecting to the supply station and the discharge station, which distribution disc (22) rotatable in a direction of rotation (B) and has a series of holes (23) at its circumference for accommodation of the heads (31) of the articles (30), wherein the upper side of the distribution disc (22) comprises slits (26) for accommodation of the sticks (32), which slits (26) extend from the holes (23) to the outer edge of the distribution disc (22) and wherein the slits (26) comprise a bottom (50) and edges (51,52) extending from the bottom (50) up and situated at a downstream side and upstream side of the slit (26) in direction of rotation, respectively, **characterized in that** the downstream edge (81) runs at least almost in a vertical plane and at least almost up to the upper side of the distribution disc (22), and the upstream edge (52) in at least an upper portion gives way with respect to the downstream edge in upstream direction.

2. Device according to claim 1, wherein the upper side of the distribution disc (22) at the upstream side of each slit (26) is provided with a recess which merges into the slit (26), wherein the recesses are preferably less deep than the slits .

3. Device according to claim 2, wherein the recesses in the upstream direction are bounded by an inclined edge portion (53), wherein the inclined edge portion (53) at the side of the recess facing away from the slit (26) preferably at least almost connects to the upper side of the distribution disc (22).

4. Device according to claim 3, wherein the inclined edge (53) portion also slopes towards the hole (23).

5. Device according to claim 4, wherein a generating line of the inclined edge portion (56) is oriented to the centre of the hole (23), and wherein the generating line preferably comprises a convex curve, as considered from the upper side of the distribution disc (22).

6. Device according to claim 3-5, wherein a cross-section of the inclined edge portion (53) in direction almost tangential to the distribution disc (22) comprises a concave curve (55), as considered from the upper side of the distribution disc (22).

7. Device according to any one of the preceding claims, wherein the slits (26) are shifted parallel over a distance s with respect to a radial line (61) through the centre (M2) of the corresponding holes (23) and/or a radial line through the centre of the distribution disc (22).

8. Device according to any one of the preceding claims, wherein the slits (26) are placed at an angle β to a radial line (60) of the distribution disc (22).

9. Device according to any one of the preceding claims, wherein the opening of the slits (26) at the outer edge of the distribution disc (22) is situated shifted in downstream direction with respect to an axial line of the distribution disc (22) which runs through the centre (M2) of the corresponding holes (23).

10. Device for supplying articles (30) provided with a head (31) and a stick (32), such as lollipops, to a further treatment station, such as a packaging machine, comprising:
a supply station for the articles (30) in a disorderly flow,
a discharge station for discharge of the articles (30) in an orderly flow,
a distribution disc (22) connecting to the supply station and the discharge station, which distribution disc (22) is rotatable in a direction of rotation (B) and has a series of holes (23) at its circumference for accommodation of the heads (31) of the articles (30), wherein the upper side of the distribution disc (22) comprises slits (26) for accommodation of the sticks (32), which slits (26) extend from the holes (23) to the outer edge of the distribution disc (22) and wherein the slits (26) comprise a bottom (50) and edges (51, 52) extending from the bottom (50) up and situated at a downstream side and upstream side of the slits (26) in direction of rotation, respectively, **characterized in that** the at least one of the downstream and upstream edge (51, 52) of the slits (26) in at least an upper portion of the slit (26) gives way for forming an inclined edge (53) portion that also slopes towards the hole (23).

## Patentansprüche

1. Vorrichtung für die Beschickung von Artikeln (30), wie z.B. Lutschern, welche mit einem Kopf (31) und einem Stiel (32) versehen sind, zu einer nachgeschalteten Verarbeitungsstation, wie z. B. einer Verpackungsmaschine,
enthaltend
eine Zufuhrstation für die Artikel (30) in ungeordnetem Strom,
eine Abfuhrstation zum Weitertransport der Artikel (30) in geordnetem Strom,
eine mit der Zufuhrstation und der Abfuhrstation verbundene Verteilerscheibe (22), welche in einer Richtung (6) drehbar gelagert ist und an ihrem Umfang eine Reihe von Bohrungen (23) zur Aufnahme der Köpfe (31) der Artikel (30) besitzt, wobei die Oberseite der Verteilerscheibe (22) Schlitze (26) zur Aufnahme der Stiele (32) aufweist und diese Schlitze (26) sich von den Bohrungen (23) bis zum äußeren Rand der Verteilerscheibe (22) erstrecken und die Schlitze (26) aus einer Mulde (50) und Kanten (51, 52) bestehen, die sich von der Mulde (50) aufwärts erstrecken und jeweils an der in Drehrichtung stromauf- bzw. stromabwärtigen Seite des Schlitzes (26) liegen, **dadurch gekennzeichnet, dass** die stromabwärtige Kante (81) in einer zumindest nahezu vertikalen Ebene und zumindest nahezu bis zur Oberseite der Verteilerscheibe (22) verläuft, und die stromaufwärtige Kante (52) zumindest in ihrem oberen Teil vor der stromabwärtigen Kante in stromaufwärtiger Richtung zurückweicht.

2. Vorrichtung gemäß Anspruch 1, **dadurch gekennzeichnet, dass** die Oberseite der Verteilerscheibe (22) an der stromaufwärtigen Seite eines jeden Schlitzes (26) mit einer Vertiefung versehen ist, die in den Schlitz mündet (26), wobei die Vertiefungen vorzugsweise eine geringere Tiefe besitzen als die Schlitze.

3. Vorrichtung gemäß Anspruch 2, **dadurch gekennzeichnet, dass** die Vertiefungen in stromaufwärtiger Richtung durch einen geneigten Kantenabschnitt (53) begrenzt sind, wobei der geneigte Kantenabschnitt (54) an der Seite der vom Schlitz (26) abgewandten Vertiefung vorzugsweise zumindest nahezu mit der Oberseite der Verteilerscheibe (22) abschließt.

4. Vorrichtung gemäß Anspruch 3, **dadurch gekennzeichnet, dass** der geneigte Kantenabschnitt (53) auch bis zur Bohrung (23) abfällt.

5. Vorrichtung gemäß Anspruch 4, **dadurch gekennzeichnet, dass** eine Generatorlinie des geneigten Kantenabschnitts (56) zur Mitte der Bohrung (23) weist, wobei diese Generatorlinie, von der Oberseite der Verteilerscheibe (22) aus betrachtet, vorzugsweise eine konvexe Kurve darstellt.

6. Vorrichtung gemäß den Ansprüchen 3 bis 5, **dadurch gekennzeichnet, dass** ein Querschnitt des geneigten Kantenabschnitts (53) in nahezu tangentialer Richtung zur Verteilerscheibe (22), von der Oberseite der Verteilerscheibe (22) aus betrachtet, eine konkave Kurve (55) beschreibt.

7. Vorrichtung gemäß einem der vorangegangenen Ansprüche, **dadurch gekennzeichnet, dass** die Schlitze (26) über eine Strecke s gegenüber einer durch den Mittelpunkt (M₂) der zugehörigen Bohrungen (23) verlaufenden Radiallinie (61) und/oder einer durch den Mittelpunkt der Verteilerscheibe (22) verlaufenden Radiallinie parallel verschoben angeordnet sind.

8. Vorrichtung gemäß einem der vorangegangenen Ansprüche, **dadurch gekennzeichnet, dass** die Schlitze (26) in einem Winkel β zur Radiallinie (60) der Verteilerscheibe (22) angeordnet sind.

9. Vorrichtung gemäß einem der vorangegangenen Ansprüche, **dadurch gekennzeichnet, dass** die Öffnung der Schlitze (26) an der Außenkante der Verteilerscheibe (22) in stromabwärtiger Richtung gegenüber einer durch den Mittelpunkt (M₂) der zugehörigen Bohrungen (23) verlaufenden Axiallinie der Verteilerscheibe 22) verschoben angeordnet ist.

10. Vorrichtung für die Beschickung von Artikeln (30), z.B. Lutschern, mit einem Kopf (31) und einem Stiel (32) zu einer nachgeschalteten Verarbeitungsstation, wie z. B. einer Verpackungsmaschine, enthaltend
eine Zufuhrstation für die Artikel (30) in ungeordnetem Strom,
eine Abfuhrstation zum Weitertransport der Artikel (30) in geordnetem Strom,
eine mit der Zufuhrstation und der Abfuhrstation verbundenen Verteilerscheibe (22), welche in einer Richtung (6) drehbar gelagert ist und an ihrem Umfang eine Reihe von Bohrungen (23) zur Aufnahme der Köpfe (31) der Artikel (30) besitzt, wobei die Oberseite der Verteilerscheibe (22) Schlitze (26) zur Aufnahme der Stiele (32) aufweist und diese Schlitze (26) sich von den Bohrungen (23) bis zum äußeren Rand der Verteilerscheibe (22) erstrecken und die Schlitze (26) aus einer Mulde (50) und Kanten (51, 52) bestehen, die sich von der Mulde (50) aufwärts und jeweils an der in Drehrichtung stromauf- bzw. stromabwärtigen Seite des Schlitzes (26) liegen, **dadurch gekennzeichnet, dass** die stromaufwärtige und stromabwärtige Kante (51, 52) der Schlitze (26) zumindest in einem oberen Abschnitt des Schlitzes (26) zurückweicht und einen geneigten Kantenabschnitt (53) bildet, der ebenfalls zur Bohrung (23) hin abfällt.

## Revendications

1. Dispositif pour distribuer des articles (30) dotés d'une tête (31) et d'un bâton (32), tels que des sucettes, à un poste de traitement ultérieur, tel qu'une machine d'emballage, comportant :
un poste de distribution des articles (30) en écoulement désordonné,
un poste d'évacuation pour l'évacuation des articles (30) en écoulement ordonné,
un disque de répartition (22) relié au poste de distribution et au poste d'évacuation, lequel disque de répartition (22) est mobile en rotation dans une direction de rotation (B) et présente une série de trous (23) au niveau de sa circonférence afin de recevoir les têtes (31) des articles (30), la face supérieure du disque de répartition (22) comportant des fentes (26) afin de recevoir les bâtons (32), lesquelles fentes (26) se prolongent depuis les trous (23) jusqu'au bord extérieur du disque de répartition (22), les fentes (26) comportant un fond (50) et des bords (51, 52) s'étendant en remontant depuis le fond (50) et situés respectivement d'un côté aval et d'un côté amont de la fente (26) dans la direction de rotation, **caractérisé en ce que** le bord aval (51) s'étend au moins presque verticalement et au moins presque jusqu'à la face supérieure du disque de répartition (22) et le bord amont (52), au moins dans une portion supérieure, s'évase par rapport au bord aval dans la direction amont.

2. Dispositif selon la revendication 1, dans lequel la face supérieure du disque de répartition (22) à l'amont de chaque fente (26) est dotée d'un renfoncement qui fusionne avec et dans la fente (26), les renfoncements étant de préférence moins profonds que les fentes.

3. Dispositif selon la revendication 2, dans lequel les renfoncements dans la direction amont sont limités par une portion de bord incliné (53) et dans lequel, de préférence, la portion de bord incliné (53), au niveau de la face du renfoncement orienté dans la direction opposée à la fente (26) est au moins presque raccordée à la face supérieure du disque de répartition (22).

4. Dispositif selon la revendication 3, dans lequel la portion de bord incliné (53) présente également une pente vers le trou (23).

5. Dispositif selon la revendication 4, dans lequel une ligne génératrice de la portion de bord incliné (53) est orientée vers le centre du trou (23), et dans lequel la ligne génératrice comporte de préférence une courbe convexe, vue de la face supérieure du disque de répartition (22).

6. Dispositif selon les revendications 3 à 5, dans lequel une section droite de la portion de bord incliné (53) dans la direction presque tangente au disque de répartition (22) comporte une courbe concave (55), vue de la face supérieure du disque de répartition (22).

7. Dispositif selon l'une quelconque des revendications précédentes, dans lequel les fentes (26) sont décalées parallèlement d'une distance s par rapport à une ligne radiale (61) passant par le centre (M2) des trous (23) correspondants et/ou une ligne radiale passant par le centre du disque de répartition (22).

8. Dispositif selon l'une quelconque des revendications précédentes, dans lequel les fentes (26) sont orientées suivant un angle β par rapport à une ligne radiale (60) du disque de répartition (22).

9. Dispositif selon l'une quelconque des revendications précédentes, dans lequel l'ouverture des fentes (26) au bord extérieur du disque de répartition (22) se trouve décalée vers l'aval par rapport à une ligne axiale du disque de répartition (22) passant par le centre (M2) des trous (23) correspondants.

10. Dispositif pour distribuer des articles (30) dotés d'une tête (31) et d'un bâton (32), tels que des sucettes, à un poste de traitement ultérieur, tel qu'une machine d'emballage, comportant :
un poste de distribution des articles (30) en écoulement désordonné,
un poste d'évacuation pour l'évacuation des articles (30) en écoulement ordonné,
un disque de répartition (22) relié au poste de distribution et au poste d'évacuation, lequel disque de répartition (22) est mobile en rotation dans une direction de rotation (B) et présente une série de trous (23) au niveau de sa circonférence afin de recevoir les têtes (31) des articles (30), la face supérieure du disque de répartition (22) comportant des fentes (26) afin de recevoir les bâtons (32), lesquelles fentes (26) se prolongent depuis les trous (23) jusqu'au bord extérieur du disque de répartition (22), les fentes (26) comportant un fond (50) et des bords (51, 52) s'étendant en remontant depuis le fond (50) et situés respectivement d'un côté aval et d'un côté amont des fentes (26) dans la direction de rotation, **caractérisé en ce qu'**au moins un des bords aval et amont (51, 52) des fentes (26), au moins dans une portion supérieure de la fente (26), s'évase pour former une portion de bord incliné (53) qui présente également une pente vers le trou (23).
